# EUROPÄISCHE PATENTSCHRIFT

(11) **EP 1 322 690 B1**
(45) Veröffentlichungstag und Bekanntmachung des Hinweises auf die Patenterteilung: **09.04.2014**
(21) Anmeldenummer: 01982353.3
(22) Anmeldetag: 26.09.2001
(51) Int. Cl.: C08G 18/81, C08G 18/67, C09D 175/16

(54) **BESCHICHTUNGSSTOFFSYSTEM FÜR DIE HERSTELLUNG FARB- UND/ODER EFFEKTGEBENDER MEHRSCHICHTLACKIERUNGEN AUF DER BASIS VON MEHRKOMPONENTENBESCHICHTUNGSSTOFFEN**
COATING SYSTEM FOR PRODUCING COLOR- AND/OR EFFECT-IMPARTING MULTILAYER COATINGS ON THE BASIS OF MULTI-COMPONENT COATING MATERIALS
SYSTEME D'AGENTS DE REVETEMENT PERMETTANT LA REALISATION DE PEINTURES MULTICOUCHES DE COLORATION ET/OU A EFFETS, SE BASANT SUR DES AGENT DE REVETEMENT A CONSTITUANTS MULTIPLES

(30) Priorität: 30.09.2000 DE 10048670
(43) Veröffentlichungstag der Anmeldung: 02.07.2003
(73) Patentinhaber: BASF Coatings GmbH, 48165 Münster (DE)
(72) Erfinder: LETTMANN, Bernhard, 48317 Drensteinfurt (DE); NIENHAUS, Egbert, 59387 Ascheberg (DE)
(74) Vertreter: Leifert & Steffan
(86) Internationale Anmeldenummer: PCT/EP2001/011105
(87) Internationale Veröffentlichungsnummer: WO 2002/028938

(56) Entgegenhaltungen:
- EP-A- 0 928 800
- EP-A- 0 952 170
- WO-A1-02/26853
- DE-A- 19 818 735
- DE-A- 19 860 041
- US-A- 4 342 793

## Beschreibung

Die vorliegende Erfindung betrifft ein neues lösemittelhalfiges Beschichtungsstoffsystem für die Herstellung farb- und/oder effektgebender Mehrschichtlackierungen auf der Basis von Mehrkomponentenbeschichtungstoffen. Außerdem betrifft die vorliegende Erfindung die Verwendung des neuen Beschichtungsstoffsystems für die Automobilerstlackierung, die Autoreparaturlackierung, die Lackierung von Möbeln, Türen, Fenstern oder Bauwerken im Innen- und Außenbereich sowie für die industrielle Lackierung, inklusive Coil Coating, Container Coating und die Beschichtungen oder Imprägnierung elektrotechnischer Bauteile, insbesondere aber die Autoreparaturlackierung.

Hier und im folgenden wird unter aktinischer Strahlung elektromagnetische Strahlung wie nahes Infrarot (NIR), sichtbares Licht, UV-Strahlung oder Röntgenstrahlung, insbesondere UV-Strahlung, oder Korpuskularstrahlung wie Elektronenstrahlung verstanden.

Von der Fachwelt wird die Härtung mit Hitze und aktinischer Strahlung auch kurz als Dual-Cure bezeichnet.

Ein Dual-Cure-Mehrkomponentensystem ist beispielsweise aus der europäischen Patentanmeldung EP 0 928 800 A1 bekannt. Es enthält ein Urethan(meth)acrylat mit freien Isocyanatgruppen und (Meth)Acryloylgruppen, einen Photoinitiator und eine isocyanatreaktive Verbindung, insbesondere ein Polyol oder Polyamin. Ein Bestandteil, der sowohl isocyanatreaktive funktionelle Gruppen als auch funktionelle Gruppen mit mindestens einer mit aktinischer Strahlung aktivierbaren Bindung enthält, wird nicht eingesetzt. Dieser Dual-Cure-Beschichtungsstoff bietet zwar die Möglichkeit, die Eigenschaftsprofile von Beschichtungsstoff und von Beschichtung zu variieren und gezielt an unterschiedliche Verwendungszwecke anzupassen, indes ist seine Ablüftzeit noch zu lang und seine Anfangshärte in den Schattenzonen komplex geformter dreidimensionaler Substrate, die durch die aktinische Strahlung nicht ohne größeren apparativen Aufwand erreicht werden, zu gering. Die Herstellung eines integrierten Beschichtungsstoffsystems für die Herstellung farb- und/oder effektgebender Mehrschichtlackierungen auf der Basis von Mehrkomponentenbeschichtungstoffen wird in der Patentanmeldung nicht beschrieben.

Außerdem sind Dual-Cure-Mehrkomponentensysteme aus der deutschen Patentanmeldung DE 198 18 735 A 1 bekannt. Diese enthalten obligatorisch
- ein oder mehrere radikalisch polymerisierbare Doppelbindungen aufweisende Verbindungen (A), die zudem zusätzlich mindestens eine weitere i. S. einer Additions- und/oder Kondensationsreaktion reaktive funktionelle Gruppen enthalten, und
- ein oder mehrere radikalisch polymerisierbare Doppelbindungen aufweisende Verbindungen (B), die zudem zusätzlich mindestens eine weitere i. S. einer Additions- und/oder Kondensationsreaktion reaktive funktionelle Gruppe enthalten, wobei die zusätzliche reaktive funktionelle Gruppe komplementär bzw. reaktiv ist gegenüber den zusätzlichen reaktiven funktionellen Gruppen der Verbindungen (A).

Darüber hinaus können sie mindestens eine monomere, oligomere und/oder polymere Verbindung (C) mit mindestens einer gegenüber den zusätzlich zu den radikalisch polymerisierbaren Doppelbindungen vorhandenen funktionellen Gruppen der Verbindungen (A) oder (B) i. S. einer Additions- und/oder Kondensationsreaktion reaktive funktionelle Gruppe enthalten.

Die in der Patentanmeldung aufgeführten Vorteile, die angeblich alle darin beschriebenen Systeme aufweisen sollen, erschöpfen sich jedoch in allgemeinen Angaben und werden nicht durch ein konkretes Beispiel untermauert. Hiervon abgesehen, wird nicht angegeben, in welchen Mindestmengen die zusätzlichen reaktiven funktionellen Gruppen in den Verbindungen vorliegen sollen. Die Herstellung eines integrierten Beschichtungsstoffsystems für die Herstellung farb- und/oder effektgebender Mehrschichtlackierungen auf der Basis von Mehrkomponentenbeschichtungstoffen wird in der Patentanmeldung nicht beschrieben.

Lösemittelhaltige integrierte Beschichtungsstoffsysteme für die Herstellung farb- und/oder effektgebender Mehrschichtlackierungen auf der Basis von Mehrkomponentenbeschichtungstoffen sind an sich bekannt. Sie umfassen einen Mehrkomponentenfüller zur Herstellung einer Füllerlackierung oder Steinschlagschutzgrundierung, einen pigmentierten Mehrkomponentendecklack zur Herstellung einer farbgebenden Unidecklackierung und einen Mehrkomponentenklarlack zur Herstellung einer Klarlackierung, die ggf. zusammen mit einem üblichen und bekannten farb- und/oder effektgebenden Basislack angewandt werden kann. Für diese bekannten lösemittelhaltigen integrierten Beschichtungsstoffsysteme ist es wesentlich, daß zur Herstellung der Mehrkomponentenfüller, der pigmentierten Mehrkomponentendecklacke und der Mehrkomponentenklarlacke durchgehend der gleiche Härter und der gleiche Verdünner verwendet werden. Hierdurch resultiert eine besonders einfache und sichere Abstimmung der Eigenschaftsprofile der Mehrkomponentenlacke des integrierten Beschichtungsstoffsystems und der hieraus hergestellten Lackierungen.

Nachteilig für die bekannten lösemittelhaltigen integrierten Beschichtungsstoffsysteme ist aber, daß ihre Klarlackschichten eine vergleichsweise hohe Ablüftzeit und die hieraus hergestellten Klarlackierungen eine niedrige Anfangshärte haben. Außerdem sind die Härtungszeiten vergleichsweise lang.

Das Problem der langen Härtungszeit könnte dadurch behoben werden, daß man einen mit aktinischer Strahlung härtbaren Klarlack verwendet. Dies führte indes wegen der bekannten Neigung der mit aktinischer Strahlung härtbaren Klarlacke, beim Härten zu schrumpfen, zu Haftungsproblemen zwischen Klarlackierung und einer ggf. vorhandenen Basislackierung. Außerdem ließe sich ein solcher Klarlack nur schwer in das lösemittelhaltige Beschichtungsstoffsystem stofflich integrieren.

Die Haftungsprobleme könnten zwar durch die Verwendung der bekannten Dual-Cure-Klarlacke gelöst werden, indes löste dies nicht das Problem der fehlenden stofflichen Integrierbarkeit.

Aufgabe der vorliegenden Erfindung ist es, ein neues lösemittelhaltiges Beschichtungsstoffsystem für die Herstellung farb- und/oder effektgebender Mehrschichtlackierungen auf grundierten und ungrundierten Substraten zu finden, umfassend einen Mehrkomponentenfüller zur Herstellung einer Füllerlackierung oder Steinschlagschutzgrundierung, einen pigmentierten Mehrkomponentendecklack zur Herstellung einer farbgebenden Unidecklackierung und einen Mehrkomponentenklarlack zur Herstellung einer Klarlackierung, wobei zur Herstellung der Mehrkomponentenfüller, der pigmentierten Mehrkomponentendecklacke und der Mehrkomponentenklarlacke durchgehend der gleiche Härter und der gleiche Verdünner verwendet werden. Das neue integrierte Beschichtungsstoffsystem soll die Nachteile des Standes der Technik nicht mehr länger aufweisen, sondern einen Dual-Cure-Klarlack umfassen, der sich stofflich in das Beschichtungsstoffsystem integrieren läßt, nach seiner Applikation eine kurze Ablüftzeit und eine hohe Anfangshärte aufweist, sodaß er auch in den problematischen Schattenzonen von komplexen dreidimensionalen Substraten nicht klebrig ist. Außerdem soll die resultierende Klarlackierung fest auf einer ggf. vorhandenen farb-und/oder effektgebenden Basislackierung haften.

Insgesamt soll die mit Hilfe des neuen integrierten Beschichtungsstoffsystem hergestellte farb- und/oder effektgebende Mehrschichtlackierung einen hervorragenden optischen Gesamteindruck, eine hohe Kratzfestigkeit und eine sehr gute Chemikalien-, Benzin-, Lösemittel- und Etch- und Witterungsbeständigkeit aufweisen sowie keine Risse zeigen.

Demgemäß wurde das neue integrierte Beschichtungsstoffsystem für die Herstellung farb- und/oder effektgebender Mehrschichtlackierungen auf grundierten und ungrundierten Substraten gefunden, umfassend
(I) mindestens einen Mehrkomponentenfüller, enthaltend mindestens eine Komponente (A) mit mindestens einem Bestandteil (A 1) mit isocyanatreaktiven Gruppen und mindestens einen Füllstoff, mindestens eine Komponente (B) mit mindestens einem Polyisocyanat (B 1) und einen Verdünner (C), zur Herstellung mindestens einer Füllerlackierung oder Steinschlagschutzgrundierung,
(II) gegebenenfalls mindestens einen Mehrkomponentendecklack, enthaltend mindestens eine Komponente (A) mit mindestens einem Bestandteil (A 1) mit isocyanatreaktiven Gruppen und mindestens ein farbgebendes Pigment, mindestens eine Komponente (B) mit mindestens einem Polyisocyanat (B 1) und einen Verdünner (C), zur Herstellung mindestens einer farbgebenden Unidecklackierung und
(III) mindestens einen Mehrkomponentenklarlack, enthaltend mindestens eine Komponente (A) mit mindestens einem Bestandteil (A 1) mit isocyanatreaktiven Gruppen, mindestens eine Komponente (B) mit mindestens einem Polyisocyanat (B 1) und einen Verdünner (C),
wobei für die Herstellung der Mehrkomponentenlacke (I) bis (III) durchgehend das gleiche Polyisocyanat und der gleiche Verdünner verwendet werden, dadurch gekennzeichnet, daß als Klarlack (III) ein lösemittelhaltiges, thermisch und mit aktinischer Strahlung (Dual Cure) härtbares Mehrkomponenentensystem, enthaltend
(A) mindestens eine Komponente, enthaltend
   (A 1) mindestens einen Bestandteil mit isocyanatreaktiven funktionellen Gruppen,
   (A 2) mindestens einen Bestandteil mit isocyanatreaktiven funktionellen Gruppen und mindestens einer funktionellen Gruppe mit mindestens einer mit aktinischer Strahlung aktivierbaren Bindung,
(B) mindestens eine Komponente, enthaltend mindestens ein Polyisocyanat (B 1) und
(C) einen Verdünner,
verwendet wird.

Im folgenden wird das neue lösemittelhaltige integrierte Beschichtungsstoffsystem für die Herstellung farb- und/oder effektgebender Mehrschichtlackierungen als "erfindungsgemäßes Beschichtungsstoffsystem" bezeichnet.

Der wesentliche Bestandteil des erfindungsgemäße Beschichtungsstoffsystems ist der Dual-Cure-Klarlack (III). Er ist ein lösemittelhaltiges, thermisch und mit aktinischer Strahlung härtbares Mehrkomponentensystem.

Der Dual-Cure-Klarlack (III) enthält mindestens eine, insbesondere eine, Komponente (A). Diese wiederum enthält mindestens einen; insbesondere einen, Bestandteil (A 1) mit isocyanatreaktiven funktionellen Gruppen. Der Gehalt an isocyanatreaktiven funktionellen Gruppen kann breit variieren; vorzugsweise werden mindestens 1,8, bevorzugt mindestens 2,0 und insbesondere mindestens 2,1 meq/g Bestandteil (A 1) verwendet.

Beispiele geeigneter isocyanatreaktiver funktioneller Gruppen sind Thiol-, primäre oder sekundäre Amino-, Imino- oder Hydroxylgruppen, insbesondere Hydroxylgruppen.

Der Bestandteil (A 1) kann niedermolekular, oligomer oder polymer sein. Vorzugsweise ist er oligomer oder polymer.

Die Grundstrukturen der niedermolekularen Bestandteile (A 1) sind nicht kritisch, sondern können den unterschiedlichsten organischen Verbindungsklassen entstammen. Beispiele geeigneter Verbindungsklassen sind gegebenenfalls Heteroatome wie Sauerstoff, Stickstoff, Schwefel, Silizium oder Phosphor enthaltende Alkyl-, Cycloalkyl-, Alkylcycloalkyl-, Cycloalkylalkyl-, Aryl-, Alkylaryl-, Cycloalkylaryl- Arylalkyl- und/oder Arylcycloalkylverbindungen, die gegebenenfalls noch weitere Substituenten tragen, die indes bei der Herstellung der Bestandteile, ihrer Lagerung und/oder bei ihrer Anwendung nicht mit den mit aktinischer Strahlung aktivierbaren Bindungen reagieren dürfen.

Die Grundstrukturen der oligomeren oder polymeren Bestandteile (A 1) sind ebenfalls nicht kritisch und können den unterschiedlichsten Oligomer- und Polymerklassen entstammen. Beispiele geeigneter Oligomer- und Polymerklassen sind statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze« verwiesen. Hinsichtlich möglicherweise vorhandener Substituenten gilt das vorstehend Gesagte sinngemäß.

Beispiele gut geeigneter (Co)Polymerisate (A 1) sind Poly(meth)acrylate und partiell verseifte Polyvinylester.

Beispiele gut geeigneter Polyadditionsharze und/oder Polykondensationsharze (A 1) sind Polyester, Alkyde, Polyurethane, Polylactone, Polycarbonate, Polyether, Epoxidharz-Amin-Addukte, Polyharnstoffe, Polyamide oder Polyimide.

Es kommen auch die Pfropfmischpolymerisate der vorstehend beschriebenen Oligomere und Polymere in Betracht, wie beispielsweise (Meth)Acrylatcopolymerisat-Polyester-, - Polyurethan- oder -Epoxidharz-Pfropfmischpolymerisate.

Erfindungsgemäß weisen die (Meth)Acrylatcopolymerisate oder ihre Pfropfmischpolymerisate, insbesondere die hydroxylgruppenhaltigen, besondere Vorteile auf und werden erfindungsgemäß besonders bevorzugt als Bestandteile (A 1) verwendet.

Die (Meth)Acrylatcopolymerisate (A 1) sind an sich bekannte Polymere. Ihre Herstellung weist keine verfahrenstechnischen Besonderheiten auf, sondern erfolgt mit Hilfe der auf dem Kunststoffgebiet üblichen und bekannten Methoden der kontinuierlichen oder diskontinuierlichen radikalisch initiierten Copolymerisation in Masse, Lösung, Emulsion, Miniemulsion oder Mikroemulsion unter Normaldruck oder Überdruck in Rührkesseln, Autoklaven, Rohrreaktoren, Schlaufenreaktoren oder Taylorreaktoren bei Temperaturen von 50 bis 200°C.

Beispiele geeigneter (Meth)Acrylatcopolymerisate (A 1) und Copolymerisationsverfahren werden in den Patentanmeldungen DE 197 09 465 A 1, DE 197 09 476 A 1, DE 28 48 906 A 1, DE 195 24 182 A 1, DE 198 28 742 A 1, DE 196 28 143 A 1, DE 196 28 142 A 1, EP 0 554 783 A 1, WO 95/27742, WO 82/02387 oder WO 98/02466 beschrieben.

In der Komponente (A) sind die Bestandteile (A 1) in breit variierenden Mengen enthalten. Vorzugsweise enthält die Komponente die Bestandteile (A 1) in einer Menge von 5 bis 80, bevorzugt 6 bis 70 und insbesondere 7 bis 60 Gew.-%, jeweils bezogen auf die Komponente (A).

Außerdem enthält die Komponente (A) mindestens einen, insbesondere einen, Bestandteil (A 2) mit isocyanatreaktiven funktionellen Gruppen und mindestens einer, vorzugsweise mindestens zwei und insbesondere drei funktionellen Gruppen mit mindestens einer mit aktinischer Strahlung aktivierbaren Bindung. Der Gehalt an isocyanatreaktiven funktionellen Gruppen kann breit variieren; vorzugsweise werden mindestens 1,8, bevorzugt mindestens 2,0 und insbesondere mindestens 2,1 meq/g Bestandteil (A 2) verwendet.

Beispiele geeigneter mit aktinischer Strahlung aktivierbarer Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder - Doppelbindungen. Von diesen werden die Doppelbindungen, insbesondere die Kohlenstoff-Kohlenstoff-Doppelbindungen ("Doppelbindungen"), bevorzugt angewandt.

Gut geeignete Doppelbindungen liegen beispielsweise in (Meth)Acrylat-, Ethacrylat-, Crotonat-, Cinnamat-, Vinylether-, Vinylester-, Ethenylarylen-, Dicyclopentadienyl-, Norbornenyl-, Isoprenyl-, Isoprenyl-, Isopropenyl-, Allyl- oder Butenylgruppen; Ethenylarylen-, Dicyclopentadienyl-, Norbornenyl-, Isoprenyl-, Isopropenyl-, Allyl- oder Butenylethergruppen oder Ethenylarylen-, Dicyclopentadienyl-, Norbornenyl-, Isoprenyl-, Isopropenyl-, Allyl- oder Butenylestergruppen vor. Von diesen sind (Meth)Acrylatgruppen, insbesondere Acrylatgruppen, von besonderem Vorteil und werden deshalb erfindungsgemäß ganz besonders bevorzugt verwendet.

Der Bestandteil (A 2) kann niedermolekular, oligomer oder polymer sein. Vorzugsweise ist er oligomer oder polymer.

Die Grundstruktur des Bestandteils (A 2) ist nicht kritisch. Es können die vorstehend bei dem Bestandteil (A 1) beschriebenen Grundstrukturen verwendet werden.

Demnach entstammen die Bestandteile (A 2) insbesondere den Oligomer-und/oder Polymerklassen der (meth)acrylfunktionellen (Meth)Acrylatcopolymerisate, Polyetheracrylaten, Polyesteracrylaten, Epoxyacrylaten, Urethanacrylaten, Aminoacrylaten, Melaminacrylaten, Silikonacrylaten und Phosphazenacrylaten und den entsprechenden Methacrylaten. Bevorzugt werden Bindemittel (a1) eingesetzt, die frei von aromatischen Struktureinheiten sind. Bevorzugt werden daher Urethan(meth)acrylate, Phosphazen(meth)acrylate und/oder Polyester(meth)acrylate, besonders bevorzugt Urethan(meth)acrylate, insbesondere aliphatische Urethan(meth)acrylate, eingesetzt.

Die Herstellung von Urethan(meth)acrylaten (A 2) mit endständigen und/oder lateralen Doppelbindungen weist keine methodischen Besonderheiten auf, sondern wird im Detail in den Patentanmeldungen und Patenten DE 196 45 761 A, WO 98/10028, EP 0 742 239 A 1, EP 0 661 321 B 1, EP 0 608 021 B 1, EP 0 447 998 B 1, oder EP 0 462 287B 1 beschrieben. Außerdem sind diese Bestandteile handelsübliche Produkte und werden beispielsweise unter der Marke Rahn® 99-664 von der Firma Rahn vertrieben.

In der Komponente (A) sind die Bestandteile (A 2) in breit variierenden Mengen enthalten. Vorzugsweise enthält die Komponente (A) die Bestandteile (A 2) in einer Menge von 10 bis 60, bevorzugt 15 bis 55 und insbesondere 20 bis 50 Gew.-%, jeweils bezogen auf die Komponente (A). Darüber hinaus kann die Komponente (A) des Mehrkomponentensystems noch weitere übliche und bekannte Zusatzstoffe in wirksamen Mengen enthalten. Wesentlich ist, daß die Zusatzstoffe nicht die Dual-Cure-Vernetzungsreaktionen inhibieren oder völlig verhindern.

Beispiele geeigneter Zusatzstoffe sind Nanopartikel, thermisch oder mit aktinischer Strahlung härtbare Reaktiverdünner, niedrig siedende organische Lösemittel und hochsiedende organische Lösemittel ("lange Lösemittel"), Wasser, UV-Absorber, Lichtschutzmittel, Radikalfänger, thermolabile radikalische Initiatoren, Photoinitiatoren und -Coinitiatoren, Vernetzungsmittel, wie sie in Einkomponentensystemen verwendet werden, Katalysatoren für die thermische Vernetzung, Entlüftungsmittel, Slipadditive, Polymerisationsinhibitoren, Entschäumer, Emulgatoren, Netz-und Dipergiermittel, Haftvermittler, Verlaufmittel, filmbildende Hilfsmittel, Sag control agents (SCA), rheologiesteuernde Additive (Verdicker), Flammschutzmittel, Sikkative, Trockungsmittel, Hautverhinderungsmittel, Korrosionsinhibitoren, Wachse, Mattierungsmittel, Vorstufen organisch modifizierter Keramikmaterialien oder zusätzliche Bindemittel.

Beispiele geeigneter thermisch härtbarer Reaktiverdünner sind stellungsisomere Diethyloctandiole oder Hydroxylgruppen enthaltende hyperverzweigte Verbindungen oder Dendrimere, wie sie beispielsweise in den deutschen Patentanmeldungen DE 198 05 421 A 1, DE 198 09 643 A 1 oder DE 198 40 405 A 1 beschrieben werden.

Beispiele geeigneter mit aktinischer Strahlung härtbarer Reaktiverdünner sind die in Römpp Lexikon Lacke und Druckfarben, Georg Thieme Verlag, Stuttgart, New York, 1998, auf Seite 491 unter dem Stichwort, »Reakfivverdünner«, oder in der Spalte 7, Zeilen 1 bis 26, der DE 198 18 715 A 1 beschriebenenen oder Reaktiverdünner mit mindestens 5, insbesondere 5, mit aktinischer Strahlung aktivierbaren Bindungen im Molekül wie beispielsweise Dipentaerythritolpentaacrylat.

Beispiele geeigneter niedrigsiedender organischer Lösemittel und hochsiedender organischer Lösemittel ("lange Lösemittel") sind Ketone wie Methylethlyketon, Methylisoamylketon oder Methylisobutylketon, Ester wie Ethylacetat, Butylacetat, Ethylethoxypropionat, Methoxypropylacetat oder Butylglykolacetat, Ether wie Dibutylether oder Ethylenglykol-, Diethylenglykol-, Propylenglykol-, Dipropylenglykol-, Butylenglykol- oder Dibutylenglykoldimethyl-, -diethyl- oder -dibutylether, N-Methylpyrrolidon oder Xylole oder Gemische aromatischer und/oder aliphatischer Kohlenwasserstoffe wie Solventnaphtha®, Benzin 135/180, Dipentene oder Solvesso®.

Beispiele geeigneter thermolabiler radikalischer Initiatoren sind organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether.

Beispiele geeigneter Katalysatoren für die Vernetzung sind Dibutylzinndilaurat, Dibutylzinndioleat, Lithiumdecanoat, Zinkoctoat oder Bismutsalze wie Bismutlactat oder -dimethylolpropionat.

Beispiele geeigneter Photoinitiatoren und Coinitiatoren werden in Römpp Lexikon Lacke und Druckfarben, Georg Thieme Verlag Stuttgart, 1998, Seiten 444 bis 446, beschrieben.

Beispiele geeigneter zusätzlicher Vernetzungsmittel , wie sie in Einkomponentensystemem verwendet werden, sind Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A1 oder EP-B-0 245 700 A1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden, Carboxylgruppen enthaltende Verbindungen oder Harze, wie sie beispielsweise in der Patentschrift DE 196 52 813A1 beschrieben werden, Epoxidgruppen enthaltende Verbindungen oder Harze, wie sie beispielsweise in den Patentschriften EP 0 299 420 A1, DE 22 14 650 B , DE 27 49 576B1, US 4,091,048 A oder US 3,781,379 A beschrieben werden, blockierte Polyisocyanate, wie sie beispielsweise in den Patentschriften US 4,444,954 A, DE 196 17 086 A1, DE 196 31 269 A1, EP 0 004 571 A1 oder EP 0 582 051 A1 beschrieben werden, und/oder Tris(alkoxycarbonylamino)-triazine, wie sie in den Patentschriften US 4,939,213 A , US 5,084,541 A, US 5,288,865 A oder EP 0 604 922 A1 beschrieben werden.

Beispiele für geeignete Entlüftunsmittel sind Diazadicycloundecan oder Benzoin.

Beispiele geeigneter Emulgatoren sind nicht ionische Emulgatoren, wie alkoxylierte Alkanole, Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen, Polyolen, Phenolen und Alkylphenolen.

Beispiele geeigneter Netzmittel sind Siloxane, fluorhaltige Verbindungen, Carbonsäurehalbester, Phosphorsäureester, Polyacrylsäuren und deren Copolymere oder Polyurethane.

Ein Beispiel für einen geeigneten Haftvermittler ist Tricyclodecandimethanol.

Beispiele für geeignete filmbildende Hilfsmittel sind Cellulose-Derivate wie Celluloseacetobutyrat (CAB).

Beispiele geeigneter transparenter Füllstoffe sind solche auf der Basis von Siliziumdioxid, Aluminiumoxid oder Zirkoniumoxid; ergänzend wird noch auf das Römpp Lexikon Lacke und Druckfarben, Georg Thieme Verlag, Stuttgart, 1998, Seiten 250 bis 252, verwiesen.

Beispiele geeigneter Sag control agents sind Harnstoffe, modifizierte Harnstoffe und/oder Kieselsäuren, wie sie beispielsweise in den Literaturstellen EP 0 192 304 A1, DE 23 59 923 A1, DE 18 05 693 A1, WO 94/22968, DE 27 51 761 C1, WO 97/12945 oder "farbe + lack", 11/1992, Seiten 829 ff., beschrieben werden.

Beispiele geeigneter rheologiesteuernder Additive sind die aus den Patentschriften WO 94/22968, EP 0 276 501 A1, EP 0 249 201 A1 oder WO 97/12945 bekannten; vernetzte polymere Mikroteilchen, wie sie beispielsweise in der EP 0 008 127 A1 offenbart sind; anorganische Schichtsilikate wie Aluminium-Magnesium-Silikate, Natrium-Magnesium-und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate;

Ein Beispiel für ein geeignetes Mattierungsmittel ist Magnesiumstearat.

Beispiele geeigneter Vorstufen für organisch modifizierte Keramikmaterialien sind hydrolysierbare metallorganische Verbindungen insbesondere von Silizium und Aluminium.

Weitere Beispiele für die vorstehend aufgeführten Zusatzstoffe sowie Beispiele geeigneter UV-Absorber, Radikalfänger, Verlaufmittel, Flammschutzmittel, Sikkative, Trocknungsmittel, Hautverhinderungsmittel, Korrosionsinhibitoren und Wachse (B) werden in dem Lehrbuch »Lackadditive« von Johan Bieleman, Wiley-VCH, Weinheim, New York, 1998, im Detail beschrieben.

Die Herstellung der erfindungsgemäß zu verwendenden Komponente (A) weist keine Besonderheiten auf, sondern erfolgt in üblicher und bekannter Weise durch Vermischen der vorstehend beschriebenen Bestandteile in geeigneten Mischaggregaten wie Rührkessel, Dissolver, Rührwerksmühlen oder Extruder.

Die Komponente (B) des Dual-Cure-Klarlacks (III) enthält mindestens ein Polyisocyanat (B 1).

Die Polyisocyanate (B 1) enthalten im statistischen Mitteln mindestens 2,0, bevorzugt mehr als 2,0 und insbesondere mehr als 3,0 Isocyanatgruppen pro Molekül. Die Anzahl der Isocyanatgruppen ist nach oben im Grunde nicht begrenzt; erfindungsgemäß ist es indes von Vorteil, wenn die Anzahl 15, vorzugsweise 12, besonders bevorzugt 10, ganz besonders bevorzugt 8,0 und insbesondere 6,0 nicht überschreitet.

Beispiele geeigneter Polyisocyanate (B 1) sind isocyanatgruppenhaltige Polyurethanpräpolymere, die durch Reaktion von Polyolen mit einem Überschuß an Diisocyanaten hergestellt werden können und bevorzugt niederviskos sind.

Beispiele geeigneter Diisocyanate sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4-Diisocyanatocyclohexan, Dicyclohexylmethan-2,4'-diisocyanat, Trimethylendiisocyanat, Tetramethylendiisocyanat, Pentamethylendiisocyanat, Hexamethylendiisocyanat (HDI), Ethylethylendiisocyanat, Trimethylhexandiisocyanat, Heptamethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan, 1,2-, 1,4- oder 1,3-Bis(4-isocyanatobut-1-yl)cyclohexan oder flüssiges Bis(4-isocyanatocyclohexyl)methan eines trans/trans-Gehalts von bis zu 30 Gew.-%, vorzugsweise 25 Gew.-% und insbesondere 20 Gew.-%, wie es den Patentanmeldungen DE 44 14 032 A1, GB 1220717 A1, DE 16 18 795 A1 oder DE 17 93 785 A1 beschrieben wird, bevorzugt Isophorondiisocyanat, 5-Isocyanato-1-(2-isocyanatoeth-1-yl)-1,3,3-trimethylcyclohexan, 5-Isocyanato-1-(3-isocyanatoprop-1-yl)-1,3,3-trimethylcyclohexan, 5-Isocyanato-(4-isocyanatobut-1-yl)-1,3,3-trimethylcyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan oder HDI, insbesondere HDI.

Es können auch Isocyanurat-, Biuret-, Allophanat-, Iminooxadiazindion-, Urethan-, Harnstoff- Carbodiimid und/oder Uretdiongruppen aufweisende Polyisocyanate (B 1) verwendet werden, die in üblicher und bekannter Weise aus den vorstehend beschriebenen Diisocyanaten hergestellt werden. Beispiel geeigneter Herstellungsverfahren und Polyisocyanate sind beispielsweise aus dem Patentschriften CA 2,163,591 A, US-A-4,419,513, US 4,454,317 A, EP 0 646 608 A, US 4,801,675 A, EP 0 183 976 A1, DE 40 15 155 A1, EP 0 303 150 A1, EP 0 496 208 A1, EP 0 524 500 A1, EP 0 566 037 A1, US 5,258,482 A1, US 5,290,902 A1, EP 0 649 806 A1, DE 42 29 183 A 1oder EP 0 531 820 A1 bekannt.

Der Gehalt der Komponente (B) an den Polyisocyanaten (B 1) kann breit variieren. In erster Linie richtet er sich nach der Viskosität, die für das Vermischen mit den weiteren Komponenten notwendig ist. Vorzugsweise liegt der Gehalt bei 20 bis 80, bevorzugt 30 bis 70 und insbesondere 35 bis 65 Gew.-%, bezogen auf die Komponente (B). Vorzugsweise enthält die Komponente (B) darüber hinaus noch mindestens eines der vorstehend beschriebenen organischen Lösemittel.

Herstellung der Komponente (B) weist keine methodischen Besonderheiten auf, sondern erfolgt durch das Vermischen ihrer Bestandteile. Zur Einstellung einer niedrigen Viskosität können der Komponente (B) noch mindestens eines der vorstehend beschriebenen organischen Lösemittel zugemischt werden.

Enthält die erfindungsgemäß zu verwendende Dual-Cure-Klarlack (III) lediglich die Komponenten (A) und (B), handelt es sich um ein Zweikomponentensystem. Indes können unterschiedliche Bestandteile der Einzelkomponenten (A) und/oder (B) getrennt von diesen gelagert und erst kurz vor der Applikation zu dem Dual-Cure-Klarlack (III) vereinigt werden. Im allgemeinen wird das Zweikomponentensystem bevorzugt, weil es weniger Aufwand bei seiner Herstellung bereitet.

Die Herstellung des Dual-Cure-Klarlacks (III) aus den vorstehend beschriebenen Komponenten (A) und (B) bietet keine methodischen Besonderheiten, sondern wird mit Hilfe der üblichen und bekannten, vorstehend beschriebenen Mischvorrichtungen und -verfahren oder mittels üblicher Zwei- oder Mehrkomponenten-Dosier- und -mischanlagen durchgeführt. Idealerweise erfolgt die Durchmischung per Hand, wenn es die Viskosität der Komponenten (A) und (B) gestattet.

Das Volumenverhältnis der Komponente (A) zu Komponente (B) kann dabei breit variieren. Es richtet sich in erster Linie nach der Funktionalität und Konzentration der vorstehend beschriebenen reaktiven Bestandteile der Komponenten, insbesondere (A 1) und (A 2) einerseits und (B 1) andererseits. Der Fachmann kann daher das für jeden Einzelfall optimale Volumenverhältnis anhand seines Fachwissens gegebenenfalls unter Zuhilfenahme einfacher orientierender Versuche leicht ermitteln. Vorzugsweise liegt das Volumenverhältnis bei 10: 1 bis 1: 3, bevorzugt 8: 1 bis 1: 2,7 und insbesondere 6: 1 bis 1: 2,5.

Vor ihrer Applikation werden die vorstehend beschriebenen Dual-Cure-Klarlacke (III) mit einem Verdünner (C) versetzt. Bei dem Verdünner (C) handelt es sich um mindestens ein organisches Lösemittel; vorzugsweise werden mindestens zwei, bevorzugt mindestens drei, besonders bevorzugt mindestens vier, ganz besonders bevorzugt mindestens fünf und insbesondere mindestens sechs organische Lösemittel verwendet. Beispiele geeigneter Lösemittel sind die vorstehend bei den Zusatzstoffen beschriebenen, insbesondere Xylol, Solventnaphtha, Benzin 135/180, Methoxypropylacetat, Butylacetat, Butylglykolacetat, Ethylethoxypropionat und/oder Dipentene. Der Verdünner (C) kann in unterschiedlichen Mengen angewandt werden. Sie richten sich insbesondere nach der Applikationsviskosität, die eingestellt werden soll, und nach den gewünschten Verlaufseigenschaften. Vorzugsweise wird der Verdünner (C) in einer Menge von 5 bis 40, bevorzugt 6 bis 35 und insbesondere 7 bis 30 Gewichtsteile auf 100 Volumenteile der Komponenten (A) und (B) verwendet.

Die Zugabe des Verdünners (C) weist keine methodischen Besonderheiten auf, sondern erfolgt nach den vorstehend beschriebenen Mischmethoden. Dabei wird der Verdünner (C) während oder nach dem Vermischen der Komponenten (A) und (B) hinzugegeben.

Das erfindungsgemäße Beschichtungsstoffsystem umfaßt desweiteren mindestens einen, insbesondere einen, Mehrkomponentenfüller (I), enthaltend mindestens eine, insbesondere eine, Komponente (A) mit mindestens mindestens einem Bestandteil (A 1) mit isocyanatreaktiven Gruppen und mindestens einen Füllstoff, mindestens eine, insbesondere eine, Komponente (B) mit mindestens einem Polyisocyanat (B 1) und einen Verdünner (C), zur Herstellung mindestens einer Füllerlackierung oder Steinschlagschutzgrundierung.

Die Komponente (A) enthält mindestens einen Bestandteil (A 1) mit isocyanatreaktiven Gruppen. Als Bestandteile (A 1) kommen die vorstehend beschriebenen oligomeren und polymeren Bestandteile (A 1) in Betracht. Diese müssen nicht notwendigerweise identisch mit den Bestandteilen (A 1) des Mehrkomponentendecklacks (II) oder des Dual-Cure-Klarlacks (III) sein, sondern können den speziellen Erfordernissen von Füllern und Steinschlagschutzgrundierungen angepaßt werden. Vorzugsweise werden (Meth)Acrylatcopolymerisate verwendet, deren seitenständigen Carboxylgruppen mit Epoxiden oder deren seitenständigen Epoxidgruppen mit Carbonsäuren verestert wurden, sodaß zusätzliche Hydroxylgruppen resultieren.. Ein besonders gut geeignetes (Meth)Acrylatcopolymerisat dieser Art wird unter der Marke Synthalat® A 200 von der Firma Synthopol Chemie vertrieben.

Die Menge des Bestandteils (A 1) in der Komponente (A) kann sehr breit variieren. Vorzugsweise liegt sie bei 5 bis 50, bevorzugt 6 bis 45 und insbesondere 7 bis 40 Gew.-%, jeweils bezogen auf die Komponente (A).

Die Komponente (A) des Mehrkomponentenfüllers (I) enthält desweiteren übliche und bekannte Füllstoffe und Pigmente, wobei die Pigmente im allgemeinen nicht effektgebend sondern nur farbgebend sind. Insbesondere kommen Pigmente, die unbunte Farbe liefern, in Betracht. Außerdem kommen farbgebende Pigmente in Betracht, wie sie im Mehrkomponentendecklack (II) vorliegen.

Bei den farbgebenden Pigmenten kann es sich um organische oder um anorganische Pigmente handeln. Beispiele geeigneter Pigmente sind natürlich vorkommende Pigmente (vgl. Römpp Lexikon Lacke und Druckfarben, Georg Thieme Verlag, Stuttgart, New York, Seiten 400 und 467, »Natürlich vorkommende Pigmente«), synthetische EisenoxidPigmente, Titandioxid-Pigmente, polycyclische Pigmente (vgl. Römpp Lexikon Lacke und Druckfarben, Seite 459 »Polycyclische Pigmente«), Azomethin-Pigmente, Azopigmente (vgl. Römpp Lexikon Lacke und Druckfarben, Seite 52, »Azomethin-Pigmente«, »Azopigmente«) oder Metallkomplex-Pigmente (vgl. Römpp Lexikon Lacke und Druckfarben, Seite 379, »Metallkomplex-Pigmente«).

Beispiele geeigneter organischer und anorganischer Füllstoffe sind Kreide, Calciumsulfate, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasem oder feinteilige Pulver aus kugelförmigen Kunststoffteilchen. Ergänzend wird auf Römpp Lexikon Lacke und Druckfarben, Georg Thieme Verlag, 1998, Seiten 250 ff., »Füllstoffe«, verwiesen.

Die Pigmente und Füllstoffe sind in der Komponente (A) des Mehrkomponentenfüllers (I) in breit variierenden Mengen enthalten. Vorzugsweise sind sie einer Menge von, jeweils bezogen auf die Komponente (A), 20 bis 80, bevorzugt 25 bis 70 und insbesondere 30 bis 60 Gew.-% enthalten.

Darüber hinaus kann die Komponente (A) des Mehrkomponentenfüllers (I) die vorstehend bei dem Dual-Cure-Klarlack (III) beschriebenen Zusatzstoffe enthalten.

Der Mehrkomponentenfüller (I) enthält mindestens eine, insbesondere eine, Komponente (B) mit mindestens einem, insbesondere einem, Polyisocyanat (B 1). Wesentlich ist, daß die gleichen Polyisocyanate (B 1) verwendet werden, wie sie auch in den Komponenten (B) des Mehrkomponentendecklacks (II) und des Dual-Cure-Klarlacks (III) verwendet werden.

Vorzugsweise enthält die Komponente (B) noch mindestens eines der vorstehend beschriebenen organischen Lösemittel, um die Viskosität der Komponente (B) zu Zwecken der besseren Mischbarkeit zu erniedrigen. Vorzugsweise werden die gleichen Lösemittel wie in den Komponenten (B) des Mehrkomponentendecklacks (II) und des Dual-Cure-Klarlacks (III) verwendet.

Weitere Vorteile resultieren, wenn in der Komponente (B) die Polyisocyanate (B 1) und die organischen Lösemittel in den Mengen enthalten sind, wie sie auch in den Komponenten (B) des Mehrkomponentendecklacks (II) und des Dual-Cure-Klarlacks (III) vorliegen.

Was das Volumenverhältnis der Komponente (A) zu Komponente (B) betrifft, gilt das vorstehend bei dem Dual-Cure-Klarlack (III) Gesagte hier sinngemäß.

Der Mehrkomponentenfüller (I) enthält desweiteren den gleichen Verdünner (C), wie er auch in dem Mehrkomponentendecklack (II) und in dem Dual-Cure-Klarlack (III) enthalten ist. Hierbei ist es nicht notwendig, daß die gleichen Mengen an Verdünner (C) wie bei dem Mehrkomponentendecklack (III) und dem Dual-Cure-Klarlack (III) verwendet werden, sondern die Mengen können an die spezifischen Erfordernisse von Füllern oder Steinschlagschutzgrundierungen angepaßt werden.

Das erfindungsgemäße Beschichtungsstoffsystem kann desweiteren mindestens einen, insbesondere einen, Mehrkomponentendecklack (II), enthaltend mindestens eine, insbesondere eine, Komponente (A) mit mindestens einem Bestandteil (A 1) mit isocyanatreaktiven Gruppen und mindestens einem farb- und/oder effektgebenden Pigment, mindestens einer, insbesondere einer, Komponente (B) mit mindestens einem, insbesondere einem, Polyisocyanat (B 1) und mindestens einem Verdünner (C), umfassen zur Herstellung mindestens einer, insbesondere einer, farb- und/oder effektgebenden Decklackierung (II).

Die Komponente (A) enthält mindestens einen Bestandteil (A 1) mit isocyanatreaktiven Gruppen. Als Bestandteile (A 1) kommen die vorstehend beschriebenen oligomeren und polymeren Bestandteile (A 1) in Betracht. Diese müssen nicht notwendigerweise identisch mit den Bestandteilen (A 1) des Mehrkomponentenfüllers (I) oder des Dual-Cure-Klarlacks (III) sein, sondern können den speziellen Erfordernissen von Unidecklackierungen angepaßt werden. Vorzugsweise werden (Meth)Acrylatcopolymerisat-Polyester-Pfropfmischpolymerisate verwendet.

Die Menge des Bestandteils (A 1) in der Komponente (A) kann sehr breit variieren. Vorzugsweise liegt sie bei 20 bis 95, bevorzugt 25 bis 90 und insbesondere 30 bis 90 Gew.-%, jeweils bezogen auf die Komponente (A).

Die Komponente (A) des Mehrkomponentendecklacks (II) enthält desweiteren übliche und bekannte farb- und/oder effektgebende, insbesondere aber farbgebende, Pigmente.

Bei den farbgebenden Pigmenten handelt es sich um die vorstehend bei dem Mehrkomponentenfüller (I) beschriebenen.

Sofern verwendet, kommen als Effektpigmente Metallplättchenpigmente wie handelsübliche Aluminiumbronzen, gemäß DE 36 36 183 A1chromatierte Aluminiumbronzen, und handelsübliche Edelstahlbronzen sowie nichtmetallische Effektpigmente, wie zum Beispiel Perlglanz- bzw. Interferenzpigmente in Betracht. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, oder die Patentanmeldungen und Patente DE 36 36 156 A1, DE 37 18 446 A1, DE 37 19 804 A1, DE 39 30 601 A1, EP 0 068 311A1, EP 0 264 843A1, EP 0 265 820 A1, EP 0 283 852 A1, EP 0 293 746A1, EP 0 417 567 A1, US 4,828,826 A oder US 5,244,649 A verwiesen.

Die Pigmente sind in der Komponente (A) des Mehrkomponentendecklacks (II) in breit variierenden Mengen enthalten, die sich vor allem nach dem Deckvermögen der Pigmente richten. Vorzugsweise sind sie einer Menge von, jeweils bezogen auf die Komponente (A), 1 bis 30, bevorzugt 2 bis 25 und insbesondere 3 bis 20 Gew.-% enthalten.

Darüber hinaus kann die Komponente (A) des Mehrkomponentendecklacks (II) die vorstehend bei dem Dual-Cure-Klarlack (III) beschriebenen Zusatzstoffe enthalten.

Der Mehrkomponentendecklack (II) enthält mindestens eine, insbesondere eine, Komponente (B) mit mindestens einem, insbesondere einem, Polyisocyanat (B 1). Wesentlich ist, daß die gleichen Polyisocyanate (B 1) verwendet werden, wie sie auch in den Komponenten (B) des Mehrkomponentenfüllers (I) und des Dual-Cure-Klarlacks (III) verwendet werden.

Vorzugsweise enthält die Komponente (B) noch mindestens eines der vorstehend beschriebenen organischen Lösemittel, um die Viskosität der Komponente (B) zu Zwecken der besseren Mischbarkeit zu erniedrigen. Vorzugsweise werden die gleichen Lösemittel wie in den Komponenten (B) des Mehrkomponentenfüllers (I) und des Dual-Cure-Klarlacks (III) verwendet.

Weitere Vorteile resultieren, wenn in der Komponente (B) die Polyisocyanate (B 1) und die organischen Lösemittel in den Mengen enthalten sind, wie sie auch in den Komponenten (B) des Mehrkomponentenfüllers (I) und des Dual-Cure-Klarlacks (III) vorliegen.

Was das Volumenverhältnis der Komponente (A) zu Komponente (B) betrifft, gilt das vorstehend bei dem Dual-Cure-Klarlack (III) Gesagte hier sinngemäß.

Der Mehrkomponentendecklack (II) enthält desweiteren den gleichen Verdünner (C), wie er auch in dem Mehrkomponentenfüller (I) und in dem Dual-Cure-Klarlack (III) enthalten ist. Hierbei ist es nicht notwendig, daß die gleichen Mengen an Verdünner (C) wie bei dem Mehrkomponentenfüller (I) und dem Dual-Cure-Klarlack (III) verwendet werden, sondern die Mengen können an die spezifischen Erfordernisse von Unidecklacken und Unidecklackierungen angepaßt werden.

Methodisch weist die Applikation der einzelnen Beschichtungsstoffe des erfindungsgemäßen Beschichtungsstoffsystems keine Besonderheiten auf, sondern kann durch alle üblichen Applikationsmethoden, wie z.B. Spritzen, Rakeln, Streichen, Gießen, Tauchen, Träufeln oder Walzen erfolgen. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air - Heißspritzen.

Als Substrate kommen Oberflächen, die durch eine Härtung der hierauf befindlichen Beschichtungsstoffe unter Anwendung von Hitze und aktinischer Strahlung nicht geschädigt werden, in Betracht; das sind z. B. Metalle, Kunststoffe, Holz, Keramik, Stein, Textil, Faserverbunde, Leder, Glas, Glasfasern, Glas- und Steinwolle, mineral- und harzgebundene Baustoffe, wie Gips- und Zementplatten oder Dachziegel, sowie Verbunde dieser Materialien.

Demnach ist das erfindungsgemäße Beschichtungsstoffsystem auch für Anwendungen außerhalb der Automobilserienlackierung und Autoreparaturlackierung geeignet. Hierbei kommt es insbesondere für die Lackierung von Möbeln, Fenstern, Türen, Bauwerken im Innen- und Außenbereich und die industrielle Lackierung, inklusive Coil Coating, Container Coating und die Imprägnierung oder Beschichtung elektrotechnischer Bauteile, in Betracht. Im Rahmen der industriellen Lackierungen eignet es sich für die Lackierung praktisch aller Teile für den privaten oder industriellen Gebrauch wie Radiatoren, Haushaltsgeräte, Kleinteile aus Metall wie Schrauben und Muttern, Radkappen, Felgen, Emballagen oder elektrotechnische Bauteile wie Motorwicklungen oder Transformatorwicklungen. Vor allem aber ist das erfindungsgemäße Beschichtungsstoffsystem für die Autoreparaturlackierung geeignet.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische Elektrotauchlacke (KTL), insbesondere aber KTL, in Betracht.

Es können auch grundierte oder ungrundierte Kunststoffteile aus z. B. ABS, AMMA, ASA, CA, CAB, EP, UF, CF, MF, MPF, PF, PAN, PA, PE, HDPE, LDPE, LLDPE, UHMWPE, PC, PC/PBT, PC/PA, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden. Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Grundierung versehen werden.

Wird das erfindungsgemäße Beschichtungsstoffsystem zur Autoreparaturlackierung verwendet, sind die Substrate mit den Automobilerstlackierungen beschichtet.

Im allgmeinen werden die Füllerlackschicht (I), Decklackschicht (II) und Klarlackschicht (III) in einer Naßschichtdicke appliziert, daß nach ihrer Aushärtung Schichten mit der für ihre Funktionen notwendigen und vorteilhaften Schichtdicken resultieren. Im Falle der Füllerschicht liegt diese Schichtdicke bei 10 bis 150, vorzugsweise 15 bis 120, besonders bevorzugt 20 bis 100 und insbesondere 25 bis 90 µm, im Falle der Unidecklackschicht liegt sie Schichtdicke bei 10 bis 150, vorzugsweise 15 bis 120, besonders bevorzugt 20 bis 100 und insbesondere 25 bis 90 µm und im Falle der Klarlackierung liegt sie bei 10 bis 100, vorzugsweise 15 bis 90, besonders bevorzugt 20 bis 80 und insbesondere 25 bis 70 µm.

Vorzugsweise wird die Klarlackschicht (III) in Verbindung mit einer Basislackschicht auf der Grundlage eines physikalisch härtenden Basislacks verwendet, der eine farb- und/oder effektgebende Basislackierung liefert. Geeignete Basislacke sind aus den Patentanmeldungen EP 0 089 497 A1, EP 0 256 540 A1, EP 0 260 447 A1, EP 0 297 576A1, WO 96/12747, EP 0 523 610A1, EP 0 228 003 A1, EP0397806A1,EP0574417A1, EP 0 531 510A1,EP0581 211A1, EP 0 708 788 A1, EP 0 593 454A1, DE-A-43 28 092A1, EP 0 299 148 A1, EP 0 394 737A1, EP 0 590 484 A1, EP 0 234 362 A1, EP 0 234 361A1, EP 0 543 817 A1, WO 95/14721, EP 0 521 928A1, EP 0 522 420A1, EP 0 522 419A1, EP 0 649 865 A1, EP 0 536 712 A1, EP 0 596 460 A1, EP 0 596 461 A1, EP 0 584 818 A1, EP 0 669 356 A1, EP 0 634 431 A1, EP 0 678 536 A1, EP 0 354 261 A1, EP 0 424 705 A 1, WO 97/49745, WO 97/49747, EP 0 401 565 A1, EP 0 496 205 A1, EP 0 358 979 A1, EP 469 389A1, DE 24 46 442 A1, DE 34 09 080 A1, DE 195 47 944 A1, DE 197 41 554.7 A1 oder EP 0 817 684, Spalte 5, Zeilen 31 bis 45, bekannt.

Die Schichtdicke der Basislackierung liegt bei 5 bis 50, vorzugsweise 6 bis 40, besonders bevorzugt 7 bis 30 und insbesondere 8 bis 25 µm

Nach der Applikation der Füllerschicht (I) kann diese abgelüftet oder vollständig thermisch gehärtet werden. Vor der Applikation der Decklackschicht (II) kann die resultierende thermisch gehärtete Füllerlackierung (I) noch geschliffen und/oder poliert werden. Dies ist insbesondere im Rahmen der Autoreparaturlackierung der Fall.

Die applizierte Decklackschicht (II) kann ebenfalls abgelüftet oder vollständig thermisch gehärtet werden, bevor ggf. die Klarlackschicht (III) appliziert wird. Gegebenenfalls kann die Decklackschicht gemeinsam mit der Füllerschicht (I) und/oder der ggf. vorhandenen Klarlackschicht (III) gehärtet werden. Im allgemeinen werden aber beim Einsatz von Decklacken (II) keine Klarlacke (III) angewandt.

Das erfindungsgemäße Beschichtungssystem kann aber auch in der Weise angewandt werden, daß nach der Applikation und Härtung der Füllerschicht (I) eine Basislackschicht und eine Klarlackschicht (III) naß-innaß aufgetragen werden, wonach die Klarlackschicht (III) thermisch und mit aktinischer Strahlung gehärtet wird.

Die thermische Härtung der Füllerschicht (I) und der Decklackschicht (II) bietet keine methodischen oder apparativen Besonderheiten, sondern erfolgt bei Raumtemperatur oder, wenn kürzere Härtungszeiten gewünscht sind, bei höheren Temperaturen, wie nachstehend bei der thermischen Härtung der Dual-Cure-Klarlackschicht (III) beschrieben.

Die Aushärtung der Klarlackschicht (III) des erfindungsgemäßen Beschichtungsstoffsystems erfolgt nach einer gewissen Ablüftzeit. Sie dient beispielsweise zum Verlauf und zur Entgasung der applizierten Schichten oder zum Verdunsten von flüchtigen Bestandteilen wie Lösemittel. Die Ablüftzeit kann durch die Anwendung erhöhter Temperaturen bis 40°C und/oder durch Abblasen unterstützt und/oder verkürzt werden, sofern hierbei keine Schädigungen oder Veränderungen der applizierten Schichten eintreten, etwa eine vorzeitige vollständige Vernetzung. Hierbei zeigen die erfindungsgemäß zu verwendenden Dual-Cure-Klarlackschichten (III) eine vorteilhaft kurze Ablüftzeit von < 10, insbesondere < 6 Minuten. Dadurch wird insgesamt eine Verkürzung der Prozeßzeiten erzielt.

Die Aushärtung erfolgt mit aktinischer Strahlung, insbesondere mit UV-Strahlung, und/oder Elektronenstrahlen. Gegebenenfalls kann sie mit aktinischer Strahlung von anderen Strahlenquellen durchgeführt oder ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der applizierten Schichten gewährleistet werden.

Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Quecksilberhoch- oder - niederdruckdampflampen, welche gegebenenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepaßt werden. Bei kompliziert geformten Werkstücken wie Automobilkarosserien können die nicht direkter Strahlung zugänglichen Bereiche (Schattenbereiche) wie Hohlräume, Falzen und anderen konstruktionsbedingte Hinterschneidungen mit Punkt-, Kleinflächen- oder Rundumstrahlem, verbunden mit einer automatischen Bewegungseinrichtung für das Bestrahlen von Hohlräumen oder Kanten, ausgehärtet werden.

Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kindom 1984, beschrieben.

Hierbei kann die Aushärtung stufenweise erfolgen, d. h. durch mehrfache Belichtung oder Bestrahlung mit aktinischer Strahlung. Dies kann auch alternierend erfolgen, d. h., daß abwechselnd mit UV-Strahlung und Elektronenstrahlung gehärtet wird.

Auch die thermische Härtung weist keine methodischen Besonderheiten auf, sondern erfolgt nach den üblichen und bekannten Methoden wie Erhitzen in einem Umluftofen oder Bestrahlen mit IR-Lampen. Wie bei der Härtung mit aktinischer Strahlung kann auch die thermische Härtung stufenweise erfolgen. Vorteilhafterweise erfolgt die thermische Härtung bei Raumtemperatur oder oberhalb der Raumtemperatur, vorzugsweise bei Temperaturen >40 °C, bevorzugt >50 während einer Zeit von 1 min bis zu mehreren Tagen.

Thermische Härtung und Härtung mit aktinischer Strahlung können gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden. Der Fachmann kann die Härtungsmethode, welche für den jeweiligen Einzelfall am vorteilhaftesten ist aufgrund seines allgemeinen Fachwissens gegebenenfalls unter Zuhilfenahme einfacher Vorversuche ermitteln.

Es ist ein wesentlicher Vorteil des erfindungsgemäßen Beschichtungsstoffsystems, daß hiermit farb- und/oder effektgebende Mehrschichtlackierungen rascher hergestellt werden können, als mit herkömmlichen Beschichtungsstoffsystemen. Aufgrund der besonders vorteilhaften Eigenschaften des Dual-Cure-Klarlacks (III) haben die erfindungsgemäßen farb- und/oder effektgebenden Mehrschichtlackierungen eine hohe Anfangshärte auch in den problematischen Schattenzonen komplex geformter dreidimensionaler Substrate.

Darüber hinaus weisen die erfindungsgemäßen farb- und/oder effektgebenden Mehrschichtlackierungen, eine hohe Härte, Flexibilität, und Chemikalienbeständigkeit, einen hervorragenden Verlauf, keine Läufer, eine sehr gute Zwischenschichthaftung, einen hervorragenden optischen Gesamteindruck (Appearance), eine sehr gute Witterungsbeständigkeit, eine sehr hohe Kratzfestigkeit und Abriebfestigkeit sowie eine sehr gute Polierbarkeit auf. Ihre Zwischenschichthaftung und ihre Haftung auf den Substraten, insbesondere ihre Haftung auf einer Originallackierung, ist hervorragend.

### Beispiele

### Herstellbeispiel 1

### Die Herstellung eines thermisch härtbaren Methacrylatcopolymerisats (A 1)

In einem Stahlreaktor, ausgerüstet mit Rührer, Rückflußkühler und zwei Zulaufgefäßen, wurden 185,6 Gewichtsteile Ethylethoxypropionat vorgelegt und unter Rühren auf 160°C erhitzt. Hiernach wurde eine Monomermischung aus 114,1 Gewichtsteilen Styrol, 136,9 Gewichtsteilen Methylmethacrylat,79,3 Gewichtsteilen Butylmethacrylat, 109 Gewichtsteile n-Butylacrylat und 164,1 Gewichtsteilen Hydroxyethylmethacrylat während vier Stunden gleichmäßig zudosiert. Gleichzeitig beginnend und parallel hierzu wurde eine Initiatormischung aus 35,8 Gewichtsteilen Ethylethoxypropionat und 36,2 Gewichtsteilen Di-tert.-butylperoxid gleichmäßig zudosiert. Nach einer Stunde wurde bei 110°C mit einer Initiatormischung aus 5,7 Gewichtsteilen Butylacetat und 0,5 Gewichtsteilen tert.-Butylperoxyethylhexanoat nachinitiiert. Hiernach wurde die resultierende Reaktionsmischung während einer Stunde bei 110°C gehalten. Danach wurde die Lösung bei 80°C mit Butylacetat auf einen Festkörpergehalt von 65 Gew.-% eingestellt. Die resultierende Lösung wies eine Viskosität von 15 dPas auf. Die Hydroxylzahl des Methacrylatcopolymerisats lag bei 120 mg KOH/g.

### Herstellbeispiel 2

### Die Herstellung eines Polyester-Methacrylatcopolymerisat-Pfropfmischpolymerisats (A 1)

In einem Polykondensationsreaktor, ausgerüstet mit Rührer, dampfbeheizter Kolonne und einem Wasserscheider, wurden 796 Gewichtsteile Trimethylolpropan, 540 Gewichtsteilen Isononansäure, 821 Gewichtsteile Phthalsäureanhydrid und 83 Gewichtsteile Xylol vorgelegt und langsam aufgeheizt. Es wurde bei Temperaturen von maximal 190°C bis zu einer Säurezahl von 5 mg KOH/g und einer Viskosität von 8,0 dPas (60prozentig in Xylol) kondensiert. Anschließend wurde die Redaktionsmischung abgekühlt und bei 130°C mit 910 Gewichtsteilen Shellsol®A angelöst. Die Lösung des Polyesters wurde auf Raumtemperatur abgekühlt. Sie wies einen Festkörpergehalt von 66,5 Gew.-%, eine Säurezahl von 5 mg KOH/g und eine Viskosität von 70 dPas (original) auf.

Für die Herstellung des Polyester-Methacrylatcopolymerisat-Pfropfmischpolymerisats wurden in einem Edelstahlreaktor, ausgerüstet mit Rührer, Rückflußkühler, einem Monomerzulauf und einem Initiatorzulauf, wurden 700 Gewichtsteile der Lösung des Polyesters und 70 Gewichtsteile VEOVA®10 (Vinylester der Versatic®-Säure) vorgelegt und auf 165°C aufgeheizt. Zu der Vorlage wurden bei dieser Temperatur während vier Stunden gleichmäßig eine Monomermischung aus 350 Gewichtsteilen Styrol, 155 Gewichtsteilen Butandiolmonoacrylat und 125 Gewichtsteilen Methylmethacrylat und während fünf Stunden gleichmäßig eine Initiatorlösung aus 14 Gewichtsteilen Di-tert.-butylperoxid, 44 Gewichtsteilen Shellsol A und 25 Gewichtsteilen Xylol zudosiert. Mit beiden Zuläufen wurde gleichzeitig begonnen. Nach Beendigung der Zuläufe wurde noch während zwei Stunden bei 165°C nachpolymerisiert. Anschließend wurde die Temperatur der Lösung des Pfropfmischpolymerisats auf 120°C gesenkt. Die Lösung wurde mit Butylacetat verdünnt, so daß ein Festkörpergehalt von 65 Gew.-% resultierte. Die verdünnte Lösung wurde mit 5 Gewichtsteilen Benzoesäure versetzt.

Die Lösung des Pfropfmischpolymerisats wies eine Säurezahl von 5,3 mg KOH/g, eine Hydroxylzahl von 90 mg KOH/g und eine Viskosität von 2,3 dPas (55prozentig in Butylacetat) auf.

### Beispiel 1

### Die Herstellung eines erfindungsgemäßen Beschichtungsstoffsystems und seine Verwendung zur Herstellung einer farb- und effektgebenden Mehrschichtlackierung

Für die Herstellung des Mehrkomponentenfüllers, des Mehrkomponentendecklacks und des Dual-Cure-Klarlacks wurde jeweils der gleiche Verdünner (C) (Lösemittelgemisch aus Xylol, Solventnaphtha, Benzin 135/180, Methoxypropylacetat, Butylacetat, Butylglykolacetat, Ethylethoxypropionat und Dipentene) eingesetzt.

Bei der Herstellung des Mehrkomponentenfüllers wurden die Komponenten (A), (B) und (C) im Volumenverhältnis von 4 : 1 : 1 miteinander vermischt.

Bei dem Mehrkomponentendecklack wurden die Komponenten (A) und (B) im Volumenverhältnis von 4: 1 miteinander vermischt, wonach die resultierende Mischung mit 10%, bezogen auf (A) und (B), des Verdünners (C) verdünnt wurde.

Bei dem Dual-Cure-Klarlack wurden die Komponenten (A) und (B) im Volumenverhältnis von 2 : 1 miteinander vermischt, wonach die resultierende Mischung mit 10%, bezogen auf (A) und (B), des Verdünners (C) verdünnt wurde.

**Tabelle 1: Die stoffliche Zusammensetzung der Komponenten (A) und (B) der Beschichtungsstoffe des erfindungsgemäßen Beschichtungsstoffsystems**

| **Bestandteil** | **Füller** | **Decklack** | **Klarlack** |
|---|---|---|---|
| Komponente (A): | | | |
| Synthalat® A 200 ^{a)} | 23 | - | - |
| | | | |
| Nitrocellulosewolle | 5 | - | - |
| | | | |
| Pfropfmischpolymerisat des Herstellbeispiels 2 | - | 77 | - |
| | | | |
| Methacrylatcopolymerisat des Herstellbeispiels 1 | - | - | 30 |
| | | | |
| Rahn® 99-664 ^{b)} | - | - | 43 |
| | | | |
| Butylacetat | 20 | 7,2 | 6,8 |
| Ethylethoxypropionat | - | - | 15 |
| | | | |
| handelsübliche Pigmente | 27 | 12 | - |
| handelsübliche Füllstoffe | 24 | - | - |
| | | | |
| Byk® 325 ^{c)} | - | - | 0,3 |
| Byk® 358 ^{c)} | - | 0,3 | 0,7 |
| Byk® P104S ^{d)} | 0,7 | - | - |
| Disperbyk® 161 ^{d)} | - | 2,0 | - |
| | | | |
| Bentone® 34 ^{e)} | - | 0,3 | - |
| Aerosil® 380 ^{e)} | - | 0,2 | - |
| | | | |
| Dibutylzinndilaurat (10%ig in Butylacetat) | 0,3 | 0,3 | 0,5 |
| | | | |
| Tinuvin® 292 ^{f)} | - | 0,5 | 1,0 |
| Tinuvin® 1130 ^{f)} | - | 0,2 | - |
| Tinuvin® 400 ^{f)} | - | - | 1,0 |
| | | | |
| Irgacure® 184 ^{g)} | - | - | 1,2 |
| Lucirin® TPO ^{g)} | - | - | 0,5 |
| | | | |

| Komponente (B): | | | |
|---|---|---|---|
| Desmodur® N 3600 ^{h)} | 56 | 56 | 56 |
| Methoxypropylacetat | 22 | 22 | 22 |
| Ethylethoxypropionat | 22 | 22 | 22 |

| | | | |
|---|---|---|---|
| a) handelsübliches Epoxid-Acrylat-Harz der Firma Synthopol Chemie; Hydroxylzahl: 200 mg KOH/g; Festkörpergehalt: 70 bis 72 Gew.-%; b) handelsübliches Urethanacrylat der Firma Rahn; Hydroxylzahl: 120 mg KOH/g; Acrylatfunktionalität: 3; c) handelsübliche Verlaufmittel der Firma Byk Chemie; d) handelsübliche Netzmittel und Dispergierhilfsmittel der Firma Byk Chemie; e) Rheologiehilfsmittel; f) handelsübliche Lichtschutzmittel; g) handelsübliche Photoinitiatoren; h) handelsübliches Polyisocyanat auf der Basis von Hexamethylendiisocyanat der Firma Bayer AG; | | | |

Für die Herstellung der farbgebenden Mehrschichtlackierung wurden geschliffene Stahlbleche zunächst mit dem Füller beschichtet. Der Füller wurde in zwei Spritzgängen appliziert, während 30 Minuten bei 60°C getrocknet und anschließend geschliffen. Anschließend wurde der Decklack in zwei Spritzgängen appliziert, während 5 Minuten abgelüftet und während 30 Minuten bei 60°C getrocknet.

Danach wurden der Klarlack in zwei Spritzgängen mit einer Zwischenablüftzeit von 2,5 Minuten appliziert. Die applizierte Klarlackschicht wurde während 5 Minuten abgelüftet, während 15 Minuten bei 60°C getrocknet und anschließend mit UV-Strahlung mit einer Dosis von 1.500 mJ/cm² gehärtet. Die resultierende Klarlackierung wies eine Schichtdicke von 50 bis 60 µm auf.

Die erfindungsgemäße Mehrschichtlackierung wies eine hervorragende Appearance auf.

In einer zweiten Versuchsserie wurde das Härtungsverhalten des Beschichtungsstoffsystems in Schattenzonen von Substraten dadurch simuliert, daß die vorstehend beschriebenen Prüftafeln nicht mit UV-Strahlung gehärtet wurden. Die resultierende Klarlackierung war dennoch nicht klebrig, sondern wies eine gute Anfangshärte auf.

### Beispiel 2

### Die Herstellung eines erfindungsgemäßen Beschichtungsstoffssystems und seine Verwendung zur Herstellung einer farb- und effektgebenden Mehrschichtlackierung

Beispiel 1 wurde wiederholt, wobei anstelle des Decklacks der Tabelle 1 ein handelsüblicher Standard-Basislack der Firma BASF Coatings AG verwendet wurde. Die resultierende erfindungsgemäße Mehrschichtlackierung wies dieselben hervorragenden anwendungstechnischen Eigenschaften auf wie die des Beispiels 1.

## Patentansprüche

1. Integriertes Beschichtungsstoffsystem für die Herstellung farb-und/oder effektgebender Mehrschichtlackierungen auf grundierten und ungrundierten Substraten, umfassend
(I) mindestens einen Mehrkomponentenfüller, enthaltend mindestens eine Komponente (A) mit mindestens einem Bestandteil (A 1) mit isocyanatreaktiven Gruppen und mindestens einen Füllstoff, mindestens eine Komponente (B) mit mindestens einem Polyisocyanat (B 1) und einen Verdünner (C), zur Herstellung mindestens einer Füllerlackierung oder Steinschlagschutzgrundierung und
(III) mindestens einen Mehrkomponentenklarlack, enthaltend mindestens eine Komponente (A) mit mindestens einem Bestandteil (A 1) mit isocyanatreaktiven Gruppen, mindestens eine Komponente (B) mit mindestens einem Polyisocyanat (B 1) und einen Verdünner (C),
wobei für die Herstellung der Mehrkomponentenlacke (I) und (III) durchgehend das gleiche Polyisocyanat und der gleiche Verdünner verwendet werden, **dadurch gekennzeichnet, daß** als Klarlack (III) ein lösemittelhaltiges, thermisch und mit aktinischer Strahlung (Dual Cure) härtbares Mehrkomponenentensystem, enthaltend
(A) mindestens eine Komponente, enthaltend
(A 1) mindestens einen Bestandteil mit mindestens 1,8 meq/g an isocyanatreaktiven funktionellen Gruppen,
(A 2) mindestens einen Bestandteil mit mindestens 1,8 meq/g an isocyanatreaktiven funktionellen Gruppen und mindestens einer funktionellen Gruppe mit mindestens einer mit aktinischer Strahlung aktivierbaren Bindung,
(B) mindestens eine Komponente, enthaltend mindestens ein Polyisocyanat (B 1) und
(C) einen Verdünner,
verwendet wird.

2. Beschichtungsstoffsystem nach Anspruch 1, **dadurch gekennzeichnet, daß** es
(II) mindestens einen Mehrkomponentendecklack, enthaltend mindestens eine Komponente (A) mit mindestens einem Bestandteil (A 1) mit isocyanatreaktiven Gruppen und mindestens ein farbgebendes Pigment, mindestens eine Komponente (B) mit mindestens einem Polyisocyanat (B 1) und einen Verdünner (C), zur Herstellung mindestens einer farb- und/oder effektgebenden Decklackierung umfaßt, wobei für die Herstellung des Mehrkomponentendecklacks (II) das gleiche Polyisocyanat (B 1) und der gleiche Verdünner (C) wie in den Mehrkomponentenlacken (I) und (III) verwendet werden.

3. Beschichtungsstoffsystem nach Anspruch 1 oder 2, **dadurch gekennzeichnet**, das als mit aktinischer Strahlung aktivierbare Bindungen Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder -Doppelbindungen verwendet werden.

4. Beschichtungsstoffsystem nach Anspruch 3, **dadurch gekennzeichnet, daß** Kohlenstoff-Kohlenstoff-Dopppelbindungen ("Doppelbindungen") verwendet werden.

5. Beschichtungsstoffsystem nach Anspruch 4, **dadurch gekennzeichnet, daß** die Doppelbindungen als (Meth)Acrylat-, Ethacrylat-, Crotonat-, Cinnamat-, Vinylether-, Vinylester-, Ethenylarylen-, Dicyclopentadienyl-, Norbornenyl-, Isoprenyl-, Isoprenyl-, Isopropenyl-, Allyl- oder Butenylgruppen; Ethenylarylen-, Dicyclopentadienyl-, Norbornenyl-, Isoprenyl-, Isopropenyl-, Allyl-oder Butenylethergruppen oder Ethenylarylen-, Dicyclopentadienyl-, Norbornenyl-, Isoprenyl-, Isopropenyl-, Allyl- oder Butenylestergruppen vorliegen.

6. Beschichtungsstoffsystem nach einem der Ansprüche 1 bis 5, **dadurch gekennzeichnet, daß** es sich bei den isocyanatreaktiven funktionellen Gruppen um Thiol-, primäre oder sekundäre Amino-, Imino- oder Hydroxylgruppen handelt.

7. Beschichtungsstoffsystem nach einem der Ansprüche 1 bis 6, **dadurch gekennzeichnet, daß** es sich bei dem Bestandteil (A 1) um oligomere oder polymere, statistisch, alternierend und/oder blockartig aufgebaute lineare und/oder verzweigte und/oder kammartig aufgebaute (Co)Polymerisate von ethylenisch ungesättigten Monomeren, oder um Polyadditionsharze und/oder Polykondensationsharze handelt.

8. Beschichtungsstoffsystem nach einem der Ansprüche 1 bis 7, **dadurch gekennzeichnet, daß** der Bestandteil (A 2) im statistischen Mittel 3 funktionelle Gruppen mit mindestens einer mit aktinischer Strahlung aktivierbaren Bindung pro Molekül enthält

9. Beschichtungsstoffsystem nach einem der Ansprüche 1 bis 8, **dadurch gekennzeichnet, daß** es sich bei dem Bestandteil (A 2) um oligomere oder polymere, statistisch, alternierend und/oder blockartig aufgebaute, lineare und/oder verzweigte und/oder kammartig aufgebaute (Co)Polymerisate von ethylenisch ungesättigten Monomeren, oder um Polyadditionsharze und/oder Polykondensationsharze handelt.

10. Beschichtungsstoffsystem nach einem der Ansprüche 1 bis 8, **dadurch gekennzeichnet, daß** die Komponente (A) und/oder die Komponente (B) mindestens einen mit aktinischer Strahlung härtbaren Reaktiverdünner enthält.

11. Beschichtungsstoffsystem nach Anspruch 9, **dadurch gekennzeichnet, daß** der mit aktinischer Strahlung härtbare Reaktiverdünner mindestens 5 mit aktinischer Strahlung aktivierbare Bindungen im Molekül enthält.

12. Beschichtungsstoffsystem nach einem der Ansprüche 1 bis 10, **dadurch gekennzeichnet, daß** der Verdünner (C) mindestens zwei organische Lösemittel enthält.

13. Beschichtungsstoffsystem nach Anspruch 12, **dadurch gekennzeichnet, daß** der Verdünner (C) mindestens sechs organische Lösemittel enthält.

14. Verwendung der Beschichtungsstoffsysteme gemäß einem der Ansprüche 1 bis 13 für die Automobilerstlackierung, die Autoreparaturlackierung, die Lackierung von Möbeln, Türen, Fenstern oder Bauwerken im Innen- und Außenbereich sowie für die industrielle Lackierung, inklusive Coil Coating, Container Coating und die Beschichtungen oder Imprägnierung elektrotechnischer Bauteile.

## Claims

1. Integrated coating material system for producing multicoat color and/or effect coating systems on primed and unprimed substrates, comprising
(I) at least one multicomponent surfacer, comprising at least one component (A) comprising at least one constituent (A1) containing isocyanate-reactive groups and at least one filler, at least one component (B) comprising at least one polyisocyanate (B1), and a diluent (C), for producing at least one surfacer coat or antistonechip primer, and
(III)at least one multicomponent clearcoat material comprising at least one component (A) comprising at least one constituent (A1) containing isocyanate-reactive groups, at least one component (B) comprising at least one polyisocyanate (B1), and a diluent (C),
the same polyisocyanate and the same diluent being used throughout for producing the multicomponent coating materials (I) and (III), **characterized in that** said clearcoat material (III) comprises a solvent-containing multicomponent system curable thermally and with actinic radiation (dual cure) and comprising
(A) at least one component comprising
(A1) at least one constituent containing at least 1.8 meq/g of isocyanate-reactive functional groups,
(A2) at least one constituent containing at least 1.8 meq/g of isocyanate-reactive functional groups and at least one functional group having at least one bond which can be activated with actinic radiation,
(B) at least one component comprising at least one polyisocyanate (B1), and
(C) a diluent.

2. Coating material system according to Claim 1, **characterized in that** it comprises
(II) at least one multicomponent topcoat material comprising at least one component (A) comprising at least one constituent (A1) containing isocyanate-reactive groups and at least one color pigment, at least one component (B) comprising at least one polyisocyanate (B1), and a diluent (C), for producing at least one color and/or effect topcoat,
the same polyisocyanate (B1) and the same diluent (C) being used for producing the multicomponent topcoat material (II) as in the multicomponent coating materials (I) and (III).

3. Coating material system according to Claim 1 or 2, **characterized in that** said bonds which can be activated with actinic radiation comprise carbon-hydrogen single bonds or carbon-carbon, carbon-oxygen, carbon-nitrogen, carbon-phosphorus or carbon-silicon single bonds or double bonds.

4. Coating material system according to Claim 3, **characterized in that** carbon-carbon double bonds ("double bonds") are used.

5. Coating material system according to Claim 4, **characterized in that** the double bonds are present as (meth)acrylate, ethacrylate, crotonate, cinnamate, vinyl ether, vinyl ester, ethenylarylene, dicyclopentadienyl, norbornenyl, isoprenyl, isopropenyl, allyl or butenyl groups; ethenylarylene ether, dicyclopentadienyl ether, norbornenyl ether, isoprenyl ether, isopropenyl ether, allyl ether or butenyl ether groups; or ethenylarylene ester, dicyclopentadienyl ester, norbornenyl ester, isoprenyl ester, isopropenyl ester, allyl ester or butenyl ester groups.

6. Coating material system according to any of Claims 1 to 5, **characterized in that** the isocyanate-reactive functional groups are thiol, primary or secondary amino, imino or hydroxyl groups.

7. Coating material system according to any of Claims 1 to 6, **characterized in that** constituent (A1) comprises oligomeric or polymeric, random, alternating and/or block linear and/or branched and/or comb (co)polymers of ethylenically unsaturated monomers, or comprises polyaddition resins and/or polycondensation resins.

8. Coating material system according to any of Claims 1 to 7, **characterized in that** constituent (A2) contains on average three functional groups having at least one bond which can be activated with actinic radiation per molecule.

9. Coating material system according to any of Claims 1 to 8, **characterized in that** constituent (A2) comprises oligomeric or polymeric, random, alternating and/or block linear and/or branched and/or comb (co)polymers of ethylenically unsaturated monomers, or comprises polyaddition resins and/or polycondensation resins.

10. Coating material system according to any of Claims 1 to 8, **characterized in that** component (A) and/or component (B) comprise(s) at least one reactive diluent which is curable with actinic radiation.

11. Coating material system according to Claim 9, **characterized in that** the reactive diluent curable with actinic radiation contains in the molecule at least 5 bonds which can be activated with actinic radiation.

12. Coating material system according to any of Claims 1 to 10, **characterized in that** the diluent (C) comprises at least two organic solvents.

13. Coating material system according to Claim 12, **characterized in that** the diluent (C) comprises at least six organic solvents.

14. Use of the coating material systems according to any of Claims 1 to 13 for automotive OEM finishing, automotive refinishing, the coating of furniture, doors, windows or constructions in the interior and exterior sector and also for industrial coating, including coil coating, container coating, and the coating or impregnation of electrical components.

## Revendications

1. Système d'agents de revêtement intégré pour la réalisation de peintures multicouches de coloration et/ou à effet sur des substrats comportant une couche de base ou sans couche de base, comprenant :
(I) au moins une charge à plusieurs composants, contenant au moins un composant (A) contenant au moins un constituant (A1) comprenant des groupes réactifs avec les isocyanates et au moins une charge, au moins un composant (B) contenant au moins un polyisocyanate (B1) et un diluant (C), pour la réalisation d'au moins une peinture de remplissage ou d'une couche de base de protection anti-gravillonnage, et
(III) au moins un vernis transparent à plusieurs composants, contenant au moins un composant (A) contenant au moins un constituant (A1) comprenant des groupes réactifs avec les isocyanates, au moins un composant (B) contenant au moins un polyisocyanate (B1) et un diluant (C),
le même polyisocyanate et le même diluant étant utilisés en continu pour la fabrication des vernis à plusieurs composants (I) et (III), **caractérisé en ce qu'**un système à plusieurs composants contenant un solvant, durcissable thermiquement et par un rayonnement actinique (Dual Cure), contenant
(A) au moins un composant contenant
(A1) au moins un constituant contenant au moins 1,8 méq/g de groupes fonctionnels réactifs avec les isocyanates,
(A2) au moins un constituant contenant au moins 1,8 méq/g de groupes fonctionnels réactifs avec les isocyanates et au moins un groupe fonctionnel contenant au moins une liaison activable par un rayonnement actinique,
(B) au moins un composant contenant au moins un polyisocyanate (B1) et
(C) un diluant
est utilisé en tant que vernis transparent (III).

2. Système d'agents de revêtement selon la revendication 1, **caractérisé en ce qu'**il comprend (II) au moins un vernis de finition à plusieurs composants, contenant au moins un composant (A) contenant au moins un constituant (A1) comprenant des groupes réactifs avec les isocyanates et au moins un pigment de coloration, au moins un composant (B) contenant au moins un polyisocyanate (B1) et un diluant (C), pour la fabrication d'au moins une peinture de finition de coloration et/ou à effet,
le même polyisocyanate (B1) et le même diluant (C) que dans les vernis à plusieurs composants (I) et (III) étant utilisés pour la fabrication du vernis de finition à plusieurs composants (II).

3. Système d'agents de revêtement selon la revendication 1 ou 2, **caractérisé en ce que** des liaisons simples carbone-hydrogène ou des liaisons simples ou des doubles liaisons carbone-carbone, carbone-oxygène, carbone-azote, carbone-phosphore ou carbone-silicium sont utilisées en tant que liaisons activables par un rayonnement actinique.

4. Système d'agents de revêtement selon la revendication 3, **caractérisé en ce que** des doubles liaisons carbone-carbone (« doubles liaisons ») sont utilisées.

5. Système d'agents de revêtement selon la revendication 4, **caractérisé en ce que** les doubles liaisons se présentent sous la forme de groupes (méth)acrylate, éthacrylate, crotonate, cinnamate, éther de vinyle, ester de vinyle, éthénylarylène, dicyclopentadiényle, norbornényle, isoprényle, isopropényle, allyle ou butényle ; de groupes éther d'éthénylarylène, de dicyclopentadiényle, de norbornényle, d'isoprényle, d'isopropényle, d'allyle ou de butényle, ou de groupes ester d'éthénylarylène, de dicyclopentadiényle, de norbornényle, d'isoprényle, d'isopropényle, d'allyle ou de butényle.

6. Système d'agents de revêtement selon l'une quelconque des revendications 1 à 5, **caractérisé en ce que** les groupes fonctionnels réactifs avec les isocyanates sont des groupes thiol, amino primaires ou secondaires, imino ou hydroxyle.

7. Système d'agents de revêtement selon l'une quelconque des revendications 1 à 6, **caractérisé en ce que** le constituant (A1) consiste en des (co)polymères oligomères ou polymères, de structure statistique, alternée et/ou séquencée, linéaires et/ou ramifiés et/ou en peigne, de monomères éthyléniquement insaturés, ou en des résines de polyaddition et/ou en des résines de polycondensation.

8. Système d'agents de revêtement selon l'une quelconque des revendications 1 à 7, **caractérisé en ce que** le constituant (A2) contient en moyenne statistique 3 groupes fonctionnels contenant au moins une liaison activable par un rayonnement actinique par molécule.

9. Système d'agents de revêtement selon l'une quelconque des revendications 1 à 8, **caractérisé en ce que** le constituant (A2) consiste en des (co)polymères oligomères ou polymères, de structure statistique, alternée et/ou séquencée, linéaires et/ou ramifiés et/ou en peigne, de monomères éthyléniquement insaturés, ou en des résines de polyaddition et/ou en des résines de polycondensation.

10. Système d'agents de revêtement selon l'une quelconque des revendications 1 à 8, **caractérisé en ce que** le composant (A) et/ou le composant (B) contiennent au moins un diluant réactif durcissable par un rayonnement actinique.

11. Système d'agents de revêtement selon la revendication 9, **caractérisé en ce que** le diluant réactif durcissable par un rayonnement actinique contient au moins 5 liaisons activables par un rayonnement actinique par molécule.

12. Système d'agents de revêtement selon l'une quelconque des revendications 1 à 10, **caractérisé en ce que** le diluant (C) contient au moins deux solvants organiques.

13. Système d'agents de revêtement selon la revendication 12, **caractérisé en ce que** le diluant (C) contient au moins six solvants organiques.

14. Utilisation des systèmes d'agents de revêtement selon l'une quelconque des revendications 1 à 13 pour la première peinture d'automobiles, pour la peinture de réparation d'automobiles, la peinture de meubles, de portes, de fenêtres ou d'ouvrages dans le domaine intérieur ou extérieur, ainsi que la peinture industrielle, y compris le prélaquage en continu, le revêtement de contenants et les revêtements ou imprégnations de composants électrotechniques.
